# EUROPEAN PATENT APPLICATION

(11) **EP 2 784 477 A1**
(43) Date of publication of application: **01.10.2014**
(21) Application number: 14162179.7
(22) Date of filing: 28.03.2014
(51) Int. Cl.: G01N 5/00, G01N 5/02

(54) **Method and apparatus for determining deposits in power plant boilers and high-temperature furnaces**

(30) Priority: 28.03.2013 DE 102013205645
(71) Applicant: Universität Stuttgart, 70174 Stuttgart (DE)
(72) Inventor: Babat, Selahattin, 70619 Stuttgart (DE); Maier, Jörg, 70565 Stuttgart (DE); Ibrahim, Andreas, 70806 Kornwestheim (DE)
(74) Representative: DREISS Patentanwälte PartG mbB

(57) **Abstract**

A method for determining the quantity of deposits and residues from the combustion of solid fuels in boilers for power plants or the like, in which a sensor element is disposed at least in portions in the interior of a combustion chamber of a boiler (1), by way of which element a deposition of sediments or residues from the combustion is ascertained and which communicates with computer means (9) for the evaluation and further processing of detected data relating to the deposits, in which the method is characterized by using a gravimetrically functioning, uncooled measuring probe (10) as a sensor element, which has a heat-resistant rod (2) and a measuring cell (3) coupled with the rod, the rod (2) being introduced through the opening (4), oriented horizontally, into the interior of the boiler (1) without touching the walls of the boiler (1), and the measuring cell (3) being positioned outside the boiler (1).

## Description

The present invention relates to a method and an apparatus for determining deposits in power plant boilers, or in other words the sediments and residues that occur in such boilers because of the combustion of solid fuels, in particular. As a result of the combustion processes in so-called high-temperature furnaces, for instance of power plants, deposits, such as ashes, occur over time and settle on the internal components and inner walls of the boilers. The operating time of such high-temperature boilers is therefore not unlimited, and from time to time, the inner regions of the boilers have to be cleaned by removing the deposits. As the sediments (deposits) increase, the efficiency of such boilers decreases, since the deposited precipitates lead to unwanted encrustations on the inner components as on the heat-transfer surfaces and thus reduce the heat transfer. The cleaning is done during regular maintenance, regardless of the quantity of the deposits. However, such as a procedure is relatively expensive and does not permit permanent monitoring and control of the status about the quantity and course of such deposits. Also, those who operate such high-temperature boilers are unable to vary the severity and quantity of deposits, for instance by changing the fuel.

In the prior art, complex systems have been proposed for solving these problems, in order to monitor and determine deposits in the interior of high-temperature furnaces. German Patent Disclosure DE 196 05 287 A1, for instance, describes a method and an apparatus for controlling the travel time of a boiler, in which on the one hand a camera is used for taking pictures from the interior of the boiler, and on the other, a deposit sensor, which protrudes into the interior of the boiler, is used. In this known system, the deposit sensor is provided with a strain gauge, by way of which the weight of what is deposited on it is measured. So that the functional capability is ensured even at the prevailing high temperatures in the interior of the boiler, in this known system the deposit sensor is furthermore embodied with a cooling conduit, by way of which the measurement element is cooled down in a complicated way. Evaluating and determining the status of the deposition is done in this known system in cooperation among the pictures taken with the camera and the cooled internal deposit sensor. Such an embodiment is not only structurally expensive, but it but also tends to have problems, since the measuring element in the form of the strain gauge is disposed in the interior of the boiler. Another disadvantage of this system is that the deposit is collected on a cooled tube that has a temperature of less than 100°C. This temperature of the tube in no way matches reality in the boiler, where temperatures of approximately 450 to 700°C prevail. At very high temperatures, the functional capability is not ensured.

By comparison, it is the object of the present invention to furnish and an apparatus for determining the quantity of deposits and residues from the combustion in high-temperature boilers, which method and apparatus are both sturdy and safe in operation and make it possible to ascertain deposition rates securely over time, even while the boilers are in operation. The invention furthermore intends to enable mobile, more-flexible determination of such deposits in high-temperature boilers at the least possible structural effort and expense.

This object is attained with the method having the features of claim 1 and with the apparatus having the features of claim 6. Advantageous features and refinements of the invention are the subject of the respective dependent claims.

The method of the present invention serves to determine the quantity of deposits and residues from the combustion of solid fuels in boilers for power plants or the like, in which a sensor element is disposed at least in portions in the interior of a combustion chamber of a boiler, by way of which sensor element a deposition of sediments or residues from the combustion is ascertained, and computer means are on hand for the evaluation and further processing of detected data about the deposits., The method of the invention is characterized by using a gravimetrically functioning, uncooled measuring probe as the sensor element, which has a heat-resistant rod and a measuring cell coupled with the rod, and the rod is introduced, oriented horizontally, through the opening of the boiler into the interior of the boiler without touching the walls of the boiler, and the measuring cell is positioned outside the boiler. The measuring probe, in determining deposits, is thus not located entirely in the interior of the boiler; instead, only the heat-resistant rod protrudes through an opening in the walls of the boiler into its interior. The measuring probe is embodied as a so-called uncooled measuring probe; that is, separate cooling during the measurement of deposits deposited in the interior of the boiler during ongoing operation of the boiler is unnecessary. The actual measuring cell with which the heat-resistant rod is coupled is located outside the high-temperature boiler during the measurement. For this reason, it is not necessary for the measuring cell to be cooled during the measurement. In this way, reliable and permanent detection of the quantity of deposits in the interior of the boiler is possible. As a function of this, it is for instance possible to control one or more soot blowers. To that end, it should be noted that removing the deposits in power plants fired with hard coal is done by using soot blowers. It is thus possible to switch the soot blowers on at any time during the operation of the boiler, if the quantity of deposit measured online exceeds a predetermined limit value, or if a certain quantity of deposit at a particular point is reached.

Since the soot blowers are installed at various levels in the boiler, it is always only the soot blowers in the vicinity of the deposits detected according to the invention that are switched on, in order to remove the deposits effectively and with the least input of energy.

To detect the local differences in the rate of deposition, either a sensor according to the invention can be operated at various locations inside the boiler, or various stationary measurement points are mounted on the boiler and evaluated online.

On the other hand, the status in the interior of the boiler can be monitored permanently, and the severity of the increase in deposits can be varied by using different fuels, such as different qualities of coal.

The method according to the invention for determining the deposits in high-temperature boilers thus also serves the purpose of more-efficient control of the operation of such high-temperature boilers. Since only a heat-resistant part of the measuring probe, namely the heat-resistant rod, which can for instance take the form of a tube of a heat-resistant material, is disposed in the interior of the boiler, the method correspondingly tends not to have problems from the high temperatures in the combustion processes in the interior of such boilers.

Last but not least, the method of the present invention enables monitoring and displaying the quantity of deposits over time. Thus a so-called deposition rate, that is, a quantity of deposition occurring on a defined surface per unit of time, can be determined exactly. From the course of the occurrence of the deposits and sediments, the control of the operation and setting times for cleaning can be done more exactly than was possible before in the prior art.

The method of the invention can be performed in a structurally comparatively uncomplicated manner and does not require any complex equipment parts, such as cooling conduits or the like.

With the method of the invention, it is also in particular possible to perform fully automatic detection of deposits in the interior of such boilers. The detection and display of the deposits can be done for instance also online, using suitable data connections and computer means.

In an advantageous feature of the method of the invention, quantitative continuous acquisition and calculation of the deposits over time is performed for determining a deposition rate on the basis of the values detected by the measuring probe. To that end, suitable programming and computer means are provided, which are connected to the measuring probe. The values for the actual deposition and the course of the deposits that are detected by the measuring probe over time are used by the program to determine a permanent actual deposition rate. In this way, the deposit occurring in the interior can be monitored and detected constantly over the operation of the high-temperature boiler. The measuring probe is a sensor element which enables direct ascertainment of the quantity of deposits and encrustations in the interior on the components of the boiler. By suitably presetting the program and of the computer means, the actual deposition can thus be calculated quite accurately. Thus no interruption of the operation of the boiler is necessary in order to determine the actual status of the deposits.

In a further advantageous feature of the invention, the heat-resistant rod of the measuring probe in the interior of the boiler is positioned freely and flexibly in the interior of the boiler via horizontally displaceable guides and/or means for length adjustment. The method thus enables a flexible setup of the point at which the deposits in the interior of the respective boiler are to be detected. The apparatus can for that purpose be positioned at suitable points and openings in the walls of the boiler, without necessitating major rebuilding or disassembly. Alternatively, the apparatus could also be secured directly to the boiler. In that arrangement as well, the measurement of deposits is quite accurate.

Freely positioning the heat-resistant rod further has the advantage that direct detection of masses of the deposits can be done from outside by the measuring probe, since the rod is not secured to the boiler itself. The method of the invention is as a result not only invulnerable even at high temperatures in the boiler, but furthermore it is not vulnerable to vibration and similar external mechanical factors. This ensures a precise determination of the deposition in such high-temperature boilers.

In a further advantageous feature of the invention, a ceramic tube, which is preferably variably adjustable in length, is used as the heat-resistant rod of the measuring probe. Ceramic as a material is also quite invulnerable to high temperatures and is comparatively light in weight. The rod extending horizontally into the interior of the boiler, that is, of the combustion chamber, can accordingly be implemented in lightweight, robust fashion. Because of the form of a tube rather than a rod of solid material, a reduction in weight is achieved as well. The heat-resistant ceramic rod serving to detect the deposition is thus correspondingly lightweight and can achieve an accurate detection of the quantity of deposition with high resolution. For instance, by the method of the invention, deposits or deposits can be detected with a resolution of 1/100 g in weight, which was not possible with previous methods of this kind in the prior art.

In a further advantageous feature of the invention, the measuring cell of the measuring probe detects the quantity of deposits deposited on the heat-resistant rod by means of one or more strain gauges. To that end, the rod of the measuring probe, protruding horizontally into the interior, is coupled with the measuring cell in such a way that the quantity of deposited ingredients on the rod can be measured by means of the strain gauge; that is, it can be measured because of the varying electrical resistance and on the basis of the known variables, such as the area of that portion of the rod that protrudes into the interior of the boiler. By using one or more strain gauges as a means for detecting the mass of deposits in the measuring cell, the structural size of the requisite equipment needed for the purpose is comparatively small, and very precise measurements of the deposits on the heat-resistant rod are possible.

The apparatus of the invention, as defined in claim 6, serves to determine the quantity of sediments and residues (or deposits) from the combustion of solid fuels in boilers for power plants or the like, in which a sensor element is disposed at least in some portions in the interior of the combustion chamber of a boiler for ascertaining the deposition of sediments or residues from the combustion, and computer means for the evaluation and further processing of detected data about the deposits. The apparatus of the invention is characterized in that the sensor element is an uncooled measuring probe, based on the gravimetric principle, which has a heat-resistant rod, for introduction into the interior of the boiler via an opening, and a measuring cell, coupled to the bar, that is positioned outside the boiler. The apparatus of the invention is thus essentially split in two and comprises, first, a heat-resistant rodlike element, which can be introduced into the interior of the boiler, and second, a measuring cell, which is positioned outside of the boiler in the measurement. The measuring cell and the heat-resistant rod of the measuring probe of the invention are coupled in such a way that a change in the mass of deposits on the rod in the interior of the boiler is quantitatively detectable directly by the measuring cell. The rod is coupled via suitable connections to the measuring cell in such a way that even slight changes in the quantity of deposits (deposition) can be detected directly by the measuring probe.

Because of the specific structural embodiment of the apparatus of the invention, the heat-sensitive parts of the apparatus can be positioned outside the boiler. As a result, only the rod, protruding into the interior of the boiler, of the apparatus has to be produced from a heat-resistant material. This not only simplifies the structural makeup of the measurement apparatus but moreover makes it possible to ascertain the actual deposition in such boilers far more precisely, and during ongoing operation of the power plant. A measurement can be done in stationary or mobile form, for instance in that as needed, the apparatus is positioned from outside on the corresponding boilers, at the openings provided for the purpose in the walls of the boilers. The apparatus according to the invention allows high-precision measurement of such deposits and is invulnerable even at very high temperatures in such combustion boilers. Because of the makeup and the use of a heat-resistant rod as a kind of elongation of the measuring cell, a very high resolution in the measurement can be achieved, for instance on the order of magnitude of several hundredths of a gram in weight. Since the rod protruding through the opening into the interior is disposed without touching the boiler, very precise measurements of the actual deposits are possible. Influences from vibration or because of the high temperatures in the interior of the boiler are thus maximally precluded.

In an advantageous feature of the apparatus of the invention, horizontally displaceable guides and/or means for adjusting the length of the rod are provided. In this way, free, flexible positioning of the rod in the interior of the boiler and with various models of boilers is easily possible. The apparatus can therefore also be used for mobile purposes and is not limited to a stationary application. The provision of horizontally displaceable guides or means for length adjustment moreover makes it possible that the portion of the heat-resistant rod that protrudes into the interior of the boiler can be increased or decreased in size as needed. Depending on how much of the rod is introduced, the area that serves to measure the deposition is increased, and as a result, even more accurate measurement of the deposition is made possible.

In a further advantageous feature of the apparatus of the invention, the rod is a ceramic tube. Ceramic as a material is characterized by high heat resistance and offers the advantage of the least possible weight of the horizontally protruding element of the measuring probe. As a result, complicated counterweights or the like on the measuring cell or the mounting of the apparatus are unnecessary. The embodiment in the form of a tube, that is, a rod that is not made out of solid material, also serves to reduce the weight so that nevertheless, the largest possible area for detecting the deposits through the opening in the boiler wall is possible.

In a further advantageous feature of the apparatus of the invention, the rod is embodied as variably adjustable in length. For example, a ceramic rod can be provided that can be adjusted in telescoping fashion so that the protruding length of the rod can be increased or decreased as needed. The length adjustability has the further advantage that transporting the device from one boiler to the next boiler is made easier. Accordingly, there is no need to completely dismantle the apparatus, that is, to separate the rod from the mounting.

In a further advantageous feature of the apparatus of the invention, the measuring cell has one or more strain gauges for detecting deposits deposited on the rod. By means of the strain gauge, changes in the weight of deposits on the thus-coupled rod can be sensitively detected. The strain gauge is highly suitable for precise measurement of the increase in deposits and has a comparatively low volume, so that with it, a very compact apparatus can be achieved.

In a further advantageous feature of the apparatus of the invention, the measuring probe is mounted on a mobile stand, in particular a tripod. As a result, the apparatus can easily be set up variably at various locations. Mobile use of the apparatus is thus possible. Moreover, mounting the measuring probe on a separate stand offers very accurate measurement of deposits in the interior of the boiler, since there is no direct connection with the components of the boiler itself, and in particular with the walls of the boiler combustion chamber. Mounting it on a mobile stand furthermore has the advantage that a shift or change in the position of the rod used for the measurement can easily be done by laterally displacing the mobile stand.

In a further advantageous feature of the apparatus of the invention, the rod is detachably connected to the measuring cell via a coupling element, preferably a flange provided with a quick-release fastener. In this way, the rod and the measuring cell can be separated from one another easily and without major effort, for instance in order to mount another heat-resistant rod or to transport the apparatus from one location where it is used to the next. The connection between the heat-resistant rod and the measuring cell is preferably a connection of the kind that enables measuring the weight of deposits on the rod via strain gauges in the measuring cell. One skilled in this art is familiar with such forms of connections in various embodiments.

In a further advantageous feature of the apparatus of the invention, a heat shield is provided between the projecting end of the rod and the measuring cell. A heat shield in the form of a welded-on metal sheet makes it possible to prevent excessive influence on the outcome of measurement, or even mistakes in measurement, in the measuring cell that might otherwise be caused by from the heat of the boiler and the heat of gases emerging through the opening in the wall of the boiler can be averted. In this way, even more-secure measurement of the deposits with the apparatus of the invention is ensured.

Further advantages and features of the present invention are described in further detail below in terms of exemplary embodiment, in conjunction with the accompanying drawings. In the drawings:
Fig. 1 is a schematic view of a first exemplary embodiment of an apparatus of the invention for determining deposition; and
Fig. 2 is a schematic view of a second exemplary embodiment of an apparatus of the invention for determining deposition in the interior of a high-temperature boiler.

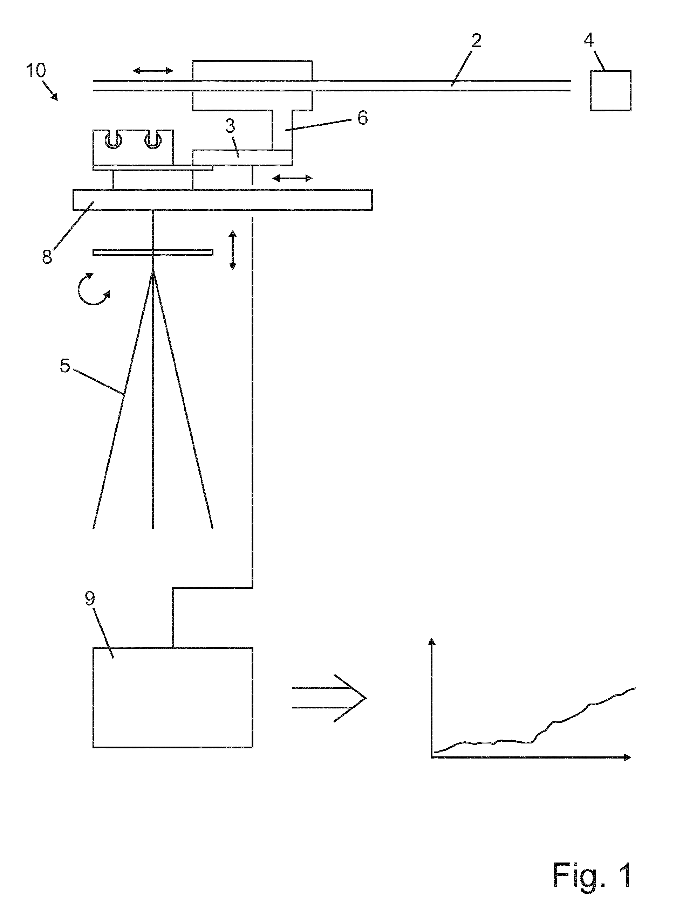

Fig. 1 in a schematic view shows a first exemplary embodiment of an apparatus of the invention for determining the deposits in a high-temperature boiler. The apparatus serves to determine the quantity of deposits and residues from the combustion of solid fuels in high-temperature boilers, known as deposition; a sensor element or at least a portion of the sensor element is disposed in the interior of a combustion chamber of a boiler. In this exemplary embodiment shown in Fig. 1, the apparatus of the invention has an elongated rod 2 or tube as well as a measuring cell 3 connected to it, which together form a so-called uncooled measuring probe 10, which operates by means of a gravimetric measuring method.

In the measuring cell 3 of the measuring probe 10, one or more strain gauges are provided for the purpose, by way of which, by means of the detection of the change in the electrical resistance, the change in the weight of the deposits on the rod 2 is detected. In this exemplary embodiment, the rod 2 is an elongated ceramic tube, which is mounted via a mounting in a horizontal orientation. The elongated ceramic rod 2 serves the purpose of contactless introduction into an opening 4, shown schematically in Fig. 1, of a boiler in which solids are combusted. The ceramic rod 2 is horizontally displaceably secured in a mounting that can be implemented by way of a screw connection or the like. For connecting the ceramic rod 2 serving to provide the actual measurement and the measuring cell 3, a coupling element 6 is provided, which is disposed in the vertical direction between the retaining elements for the rod 2 and the measuring cell 3 with the strain gauges that is located below the rod.

The measuring cell 3 of the measuring probe 10 is in turn mounted on a guide sled or guide rail 8, which likewise enables an adjustment in the horizontal direction of the measuring cell 3 together with the rod 5 and/or an adjustment in the vertical direction (height adjustment). Moreover, in this exemplary embodiment, the measuring probe 10 is provided with a tripod 5, by way of which it becomes possible to set up the measuring probe 10 in mobile fashion at an arbitrary location outside a boiler of a power plant or the like. Via the tripod 5, in this exemplary embodiment, the horizontal height of the measuring probe 10 and thus of the ceramic rod 2 can also be adjusted. Furthermore, the tripod 5 is embodied for rotation about a vertical axis, so that flexible and variable adjustment of the measurement position of the measuring probe 10 in the interior of a boiler is made possible.

If in operation of the apparatus of the invention, a front portion of the ceramic rod 2 protrudes through the opening 4 into the interior of a boiler, then with time, residues from the combustion, so-called deposition, are deposited on the surface of the rod 2. The resultant increase in weight from the mass of the deposition is transmitted via a load by means of the connection (or coupling element) 6 to the measuring cell 3, which via one or more strain gauges detects the change in terms of the deposits in the interior of the boiler from outside.

The measuring cell 3 is preferably a measuring cell which enables high resolution in detecting deposits, for instance on the order of magnitude of a resolution of 1/100 g in weight. As a result, continuous and very accurate determination of the deposits in the interior of a boiler can be done in real time; the components that are sensitive to heat are disposed purposefully outside the boiler. In particular, the measuring cell 3 with the sensitive strain gauges is positioned during the measurement outside the boiler on the tripod 5 acting as a mounting, so that an excessive transfer of heat from the hot ceramic tube or rod 2 to the measuring cell 3 of the measuring probe 10 does not occur.

The heat-resistant ceramic rod 2 is dimensioned such that it can be introduced into the interior through the opening 4 without touching the walls of the boiler and can be variably adjusted in position in the interior of the boiler. In this way, the measuring probe 10 of the invention is invulnerable to vibration and thus permits an accurate detection of the deposits in the interior of the boiler, even during the operation of a power plant or the like.

The measuring cell 3 of the measuring probe 10 is furthermore connected to computer means 9 for an evaluation and further processing of detected data relating to the deposits on the rod 2, as is schematically shown in Fig. 1. From the measured values, the quantitative quantity of the deposits is thus calculated and detected continuously in real time, so that the apparatus of the invention allows continuous correct reproduction and storage in memory of the deposits over the course of time; that is, it can ascertain a so-called deposition rate exactly. This is schematically illustrated by the graph in Fig. 1. With the method and the apparatus of the invention, the ash deposits in the interior of a high-temperature boiler can be determined very accurately in real time. On the basis of this information, on the one hand the control of boiler operation can be influenced, for instance by using different types or qualities of fuels in the boilers. Second, with the invention a precise statement can be made about how long the boiler can be in operation until cleaning becomes necessary, so that the functional capability of the high-temperature boiler is ensured over the long term. The encrustations on the inner walls that occur as a result of the deposits of ash and other residues on the inner walls and the components in the interior of the boiler lead in fact to a reduction in the heat transfer of the components and therefore severely impair the efficiency of such boilers in power plants. For efficient operation of such boilers, it is therefore important that the soot blowers be used at the proper time, yet nevertheless - because of their own energy consumption - as seldom as possible.

If it is found with the measuring probe 10 that a previously determined limit value of deposition has been reached, one or more soot blowers can be purposefully switched on, that is, wherever the deposits have been found, and the boiler walls can be cleaned.

Last but not least, with the continuous, accurate determination of ash deposits in the interior of the boiler by the measuring probe 10 of the invention, monitoring functions can also be attained; that is, the changes on the one hand in the increase or the periodic decrease of deposits resulting from different modes of operation or different types of fuels that are combusted in the high-temperature boiler can be ascertained.

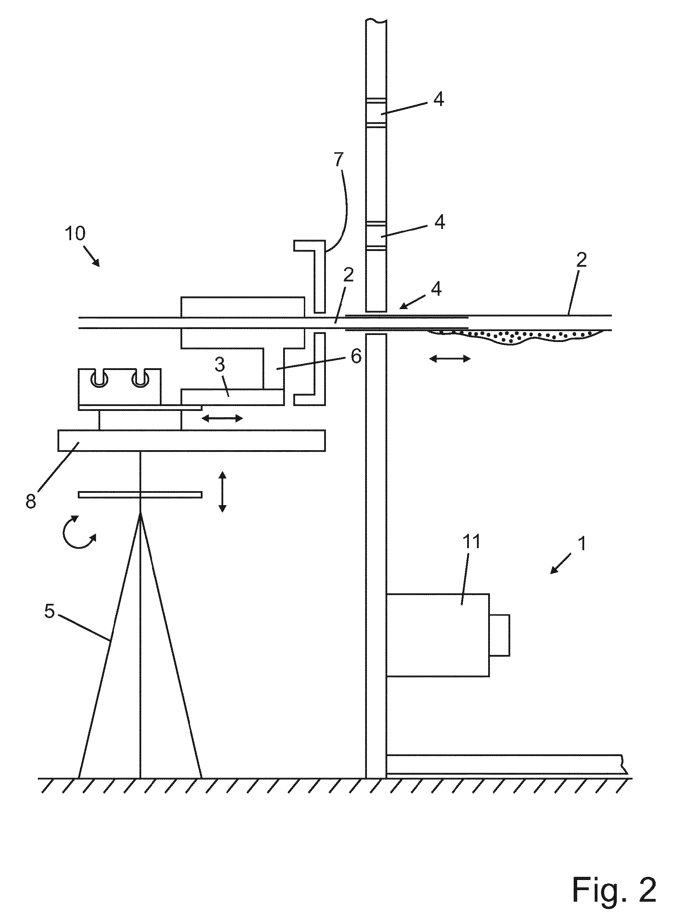

Fig. 2, in a schematic view, shows a second exemplary embodiment of an apparatus of the invention for determining the quantity of deposits in a boiler of power plants or the like: The measuring probe 10 in this exemplary embodiment is shown in the operating position; that is, the heat-resistant rod 2 has been introduced into the interior of a boiler 1 through an opening 4 in the wall of the boiler 1. In a distinction from the previous exemplary embodiment in Fig. 1, in this exemplary embodiment of Fig. 2 the rod is variably adjustable in length. For that purpose, the rod 2, which is preferably a ceramic rod, is formed of two portions nested one inside the other in telescoping fashion, which allow a variable length adjustment in the horizontal plane. This embodiment has the further advantage that a heat transfer on the part of the portion of the rod 2 located in the interior of the boiler 1 to the measuring cell 3 is further reduced, since the rod 2 has no direct connection with the portion of the measuring probe 10 located in the outer region. In the interior of the boiler 1, a burner 11 is schematically shown here, by which a solid fuel is burned in the combustion chamber of the boiler 1 and leads to deposits, in particular ash, in the form of a deposition that is detected by the ceramic rod 2.

The increase in weight from the deposits on the front, free end of the rod 2 from the deposition in the interior of the boiler 1 is transmitted to the measuring cell 3 via a suitable coupling element 6, which here as well, by means of strain gauges, calculates the quantitative quantity of the precipitation or deposition in the interior of the boiler 1. In this exemplary embodiment as well, computer means for the evaluation and further processing of the detected data are present for the purpose and are connected to the measuring cell 3, but for the sake of simplification they have not also been shown here. Between the boiler 1 and the measuring cell 3 in this exemplary embodiment of Fig. 2, a heat shield 7 is also attached. The heat shield 7 serves to avoid an excessive impairment from the heat of the side wall of the boiler 1 and from flue gases that can escape through the opening 4. This enhances the functional safety and accuracy of the measurement by the measuring probe 10 of the invention.

As in the previous exemplary embodiment, here again the measuring probe 10 as a whole is mounted on a tripod 5 of adjustable height, which can be set up in mobile fashion. The tripod 5 is moreover embodied rotatably about a vertical axis, to enable flexible positioning of the rod 2 of the measuring probe 10 at various positions in the interior of the boiler 1, as needed. The measuring cell 3 is mounted together with the rod 2 on the tripod 5 via guide rails 8 or guide sleds, which can also be adjusted for adjusting the ceramic rod 2, serving the purpose of actual measurement, in the horizontal plane. The apparatus of the invention is characterized not only in that it can be used flexibly and in mobile fashion; it is moreover structurally relatively simple. For instance, it does not require complicated cooling means for cooling the measuring probe 10. The heat-resistant ceramic rod 2 is the only component of the measuring probe 10 that is actually disposed in the interior of the boiler 1, and the other components of the measuring probe 10 are located outside the boiler 1. With the apparatus and method of the invention, very precise measurement of the deposits in the interior of a boiler is thus possible by means of an uncooled measuring probe. Detecting the deposition rates is done continuously and therefore permits more-accurate control of the operation of such high-temperature boilers of power plants as well as allowing the severity of deposits to be varied directly, for instance by means of a suitable choice of a composition of fuels that are burned in the boiler 1 by the burner 11.

Because of the construction of the elongated rod 2, which is preferably embodied in the form of a heat-resistant, for instance ceramic tube, the weight of the horizontally protruding rod 2 is comparatively slight. As a result, the least possible heat transfer from the hot interior of the boiler 1 to the measuring probe 10 is also attained.

The rod 2 can alternatively be made from some other heat-resistant material than ceramic. The rod 2 is preferably embodied as a hollow tube of rectangular cross section. Alternative, the rod 2 can also be embodied as a hollow ceramic tube of round cross section. The measuring cell 3 with the strain gauge is coupled to the computer means 9 via well-known components. According to the invention, the connection between the computer means 9 and the measuring cell 3 can preferably also be done online, so that the operation of the boiler can be monitored and controlled, without regard to its location, in terms of interruptions required for cleaning and in terms of the composition of fuels used. The measuring cell 3, which functions on the basis of the gravimetric principle, can also be achieved with other means for detecting the increase in weight on the rod 2 than strain gauges. One skilled in this art is familiar with suitable alternative forms of measuring cells or weighing cells. According to the invention, the coupling element 6 between the mounting of the rod 2 and the measuring cell 3 is preferably embodied such that it can be easily disconnected. For instance, the coupling element 6 is embodied in the form of a flange provided with a quick-release fastener. Alternatively, other forms of coupling between the rod 2 and the measuring cell 3 can be provided, as long as the functional transmission in the increase in weight resulting from the mass of deposits on the free end of the rod 2 to the measuring cell 3 can be done, as is schematically shown in Fig. 2 at the front, free end of the rod 2.

## Claims

1. A method for determining the quantity of deposits and residues from the combustion of solid fuels in boilers for power plants or the like, in which a sensor element is disposed at least in portions in the interior of a combustion chamber of a boiler (1), by way of which sensor element a deposition of deposits or residues from the combustion is ascertained and which communicates with computer means (9) for the evaluation and further processing of detected data about the deposits, **characterized by** using a gravimetrically functioning, uncooled measuring probe (10) as the sensor element, which has a heat-resistant rod (2) and a measuring cell (3) coupled with the rod, the rod (2) being introduced, oriented horizontally, through the opening (4) into the interior of the boiler (1) without touching the walls of the boiler (1), and the measuring cell (3) being positioned outside the boiler (1).

2. The method of claim 1, **characterized by** quantitative continuous acquisition and calculation of the deposits over time for determining a deposition rate on the basis of the values detected by the measuring probe (10).

3. The method of claim 1 or 2, **characterized by** free, flexible positioning of the rod (2) in the interior of the boiler (1) via horizontally displaceable guides (8) and/or means for height adjustment.

4. The method of one of the foregoing claims, **characterized by** using a ceramic tube as the rod (2) of the measuring probe (10), which tube is preferably variably adjustable in length.

5. The method of one of the foregoing claims, **characterized in that** the measuring cell (3) detects the quantity of deposits, deposited on the rod (2), by means of one or more strain gauges.

6. An apparatus for determining the quantity of deposits and residues from the combustion of solid fuels in boilers for power plants or the like, in which a sensor element is disposed at least in some portions in the interior of the combustion chamber of
a boiler (1) for ascertaining the deposition of sediments or residues from the combustion, and computer means (9) for the evaluation and further processing of detected data about the deposits, **characterized in that** the sensor element is an uncooled measuring probe (10), based on the gravimetric principle, which has a heat-resistant rod (2), for introduction into the interior of the boiler (1) via an opening (4), and a measuring cell (3), coupled to the bar, that is positioned outside the boiler (1).

7. The apparatus of claim 6, **characterized in that** horizontally displaceable guides (8) and/or means for adjusting the length of the rod (2) are provided.

8. The apparatus of claim 6 or 7, **characterized in that** the rod (2) is a ceramic tube.

9. The apparatus of one of claims 6-8, **characterized in that** the rod (2) is embodied as variably adjustable in length.

10. The apparatus of one of claims 6-9, **characterized in that** the measuring cell (3) has at least one strain gauge for detecting deposits deposited on the rod.

11. The apparatus of one of claims 6-10, **characterized in that** the measuring probe (10) is mounted on a mobile stand, in particular a tripod (5), or is attached in stationary fashion.

12. The apparatus of one of claims 6-11, **characterized in that** the rod (2) is detachably connected to the measuring cell (3) via a coupling element (6), preferably a flange provided with a quick-release fastener.

13. The apparatus of one of claims 6-12, **characterized in that** a heat shield (7) is provided between the projecting end of the rod (2) and the measuring cell (3).
